# EUROPEAN PATENT APPLICATION

(11) **EP 2 173 109 A1**
(43) Date of publication of application: **07.04.2010**
(21) Application number: 08773067.7
(22) Date of filing: 01.07.2008
(51) Int. Cl.: H04Q 1/00

(54) **RANDOM ACCESS METHOD OF TIME DIVISION SYNCHRONIZATION CODE DIVISION MULITPLE ACCESS ENHANCED UPLINK SYSTEM**

(30) Priority: 05.07.2007 CN 200710128407
(71) Applicant: ZTE Corporation, Shenzhen, Guangdong 518057 (CN)
(72) Inventor: ZHANG, Yincheng, Guangdong 518057 (CN); CHEN, Hui, Guangdong 518057 (CN); LIU, Hu, Guangdong 518057 (CN)
(74) Representative: Grünecker, Kinkeldey, Stockmair & Schwanhäusser Anwaltssozietät
(86) International application number: PCT/CN2008/071503
(87) International publication number: WO 2009/006823

(57) **Abstract**

It is disclosed a random access method of time division synchronization code division multiple access (TD-SCDMA) enhanced uplink system, comprising the following steps: the physical channel resources of the fast physical access channel (FPACH), the physical random access channel (PRACH) and the enhanced uplink random access control channel (E-RUCCH) are configured on the primary carrier of the TD-SCDMA enhanced uplink system, and the primary carrier is configured with uplink synchronization code sets to indicate a general random access and an enhanced uplink random access respectively; the uplink pilot timeslot resource is used on the secondary carrier of the TD-SCDMA enhanced uplink system, and the physical channel resources of FPACH and the E-RUCCH are configured; the user equipment performs in one transmission time interval (TTI) the general random access and/or the enhanced uplink random access.

## Description

### Filed of the Invention

The present invention relates to communication field, in particular to a random access method of time division synchronization code division multiple access enhanced uplink system.

### Background of the Invention

In order to satisfy the increasing demand for high speed uplink packet data service and also to better match with the high speed downlink packet access technology (HSDPA) for providing support for higher service quality, it is introduced respectively into Rel6 and Re17 through 3GPP a high speed uplink packet access (HSUPA) technology (also called as enhanced uplink or enhanced dedicated channel (E-DCH) technology) based on the wideband code division multiple access (WCDMA) and time division synchronization code division multiple access (TD-SCDMA). HSUPA can obtain higher user peak value rate and cell data throughput by using technologies of hybrid automatic repeat request (HARQ), high order modulation (16QAM), node B quick schedule and Rise Over Thermal (RoT) control based on T/P and so on, and a stable RoT control can be achieved.

HSUPA service is divided into scheduled transmission service and non-scheduled transmission service depending on different schedule methods wherein, enhanced uplink physical channel resources of non-scheduled transmission are allocated to user equipment (UE) in a static configuration method by a serving radio network controller (SRNC), with the allocation method identical to the existing allocation method of dedicated physical channel resources; and as for the scheduled transmission, SRNC firstly allocates a enhanced uplink physical channel resource pool which is sent to node B, and then node B allocates the enhanced uplink physical channel resources to UE by using a dynamic schedule method with the allocation method identical to the existing allocation method of physical channel resources of the relative high speed physical downlink shared channel (HS-PDSCH) of the HSDPA.

In the aspect of physical layer bearer, the HSUPA introduces the enhance physical uplink channel (E-PUCH) to bear the relative transmission channel. At the same time, in order to achieve the relative control, schedule and feedback, the HSUPA introduces into the physical layer three physical control channels, an enhanced uplink random access control channel (E-RUCCH), an enhanced absolute grant channel (E-AGCH) and an enhanced HARQ acknowledgement indicator channel (E-HICH), wherein the E-RUCCH and E-AGCH physical channels are merely used in scheduled transmission mode.

The enhanced uplink random access control channel (E-RUCCH, E-DCH random access uplink control channel, namely, enhanced uplink random access uplink control channel) is the physical layer control channel, for transmitting relative assistant schedule information (SI) and requesting the grand for E-DCH data transmission with the UE having no grand resource. As same as the physical random access channel (PRACH), the allocation method and the usage method of the E-RUCCH physical channel is a public channel preemptive mode, which is carried out during the random access, and therefore the E-RUCCH and the PRACH share the physical code resources. In order to share the physical code with the PRACH and also can distinguish the PRACH physical channel and the E-RUCCH physical channel during the random access process, the uplink synchronization codes (8 SYNC-UL codes) emitted in the uplink synchronization process in the random access process are divided into two parts wherein one part is used for indicating PRACH random access (represented as uplink synchronization code set A), and the other part is used for indicating E-RUCCH random access (represented as uplink synchronization code set B), and the sets A and B are transmitted to the UE through cell system information broadcast and to the node B through node B application part (NBAP) information. If the UE needs to perform PRACH physical channel emission (namely, general random access), during the uplink synchronization of the random access process, a uplink synchronization code in the set A is selected to carry out the uplink synchronization process, in such way, the node B will know it is PRACH physical channel to be sequentially emitted on the shared code; and if the E-RUCCH physical channel emission (namely, enhanced uplink random access) is needed, a uplink synchronization code in the set B is selected to carry out the uplink synchronization process.

At present, China Communication Standardization Association (CCSA) has established a multi-carrier TD-SCDMA system standard in which, one multi-carrier cell comprises a plurality of carriers. On e of the plural carriers is primary carrier and the others are secondary carriers. All or part of public channels are established and used only on the primary carrier, wherein, the public channel PRACH is configured and used only on the primary carrier. If the enhanced uplink technology is introduced into the multi-carrier TD-SCDMA system, generally the E-DCH is, beside being performed on the primary carrier, performed on the secondary carriers, and even on both the primary carrier and the secondary carriers at the same time. In order that the UE can transmit relative assistant schedule information without grant resources under the multi-carrier E-DCH transmission, the requesting of the grant for carrying out the E-DCH data transmission requires that the corresponding E-RUCCH physical channel configuration and the usage method are needed to be introduced into the multi-carrier system. Be cause the E-RUCCH is relative to the PRACH physical channel and the random access process, it is related to the whole random access process and the configuration and usage method of the random access resources.

### Summery of the Invention

In view of the above one or more questions, the present invention provides a random access method of time division synchronization code division multiple access enhanced uplink system.

The random access method of time division synchronization code division multiple access enhanced uplink system according to the present invention comprises: the channel resources of FPACH, PRACH, enhanced uplink random access uplink control channel are configured on the primary carrier of the TD-SCDMA enhanced uplink system, and the primary carrier is configured with the uplink synchronous code set indicating the general random access and the enhanced uplink random access; the uplink pilot timeslot resources are used on the secondary carrier of the TD-SCDMA enhanced uplink system and the physical channel resources of FPACH and enhanced uplink random access uplink control channel are configured; and the user equipment can perform in a transmission time interval (TTI) a general random access and/or an enhanced random access.

Meanwhile, the general random access is a random access in which the data is transmitted on a physical random access channel; and the enhanced uplink random access is a random access in which the data is transmitted on the enhanced uplink random access control channel.

Meanwhile, the user equipment performs the general random access or the enhanced random access on the primary carrier, and/or performs the enhanced uplink random access on one or more secondary carriers. The physical random access channel and enhanced uplink random access control channel share the physical code resources on the primary carrier. The using of the uplink pilot timeslot resource on the secondary carrier means that the uplink pilot timeslot resources on the secondary carrier are used to transmit uplink synchronization codes which are used for the enhanced uplink random access. The relative information of the physical channel resources on the primary carrier and the uplink synchronous code set are transmitted to the user equipment in the broadcasted system information. The relative information of the physical channel resources on the secondary carrier is transmitted to the user equipment in the Radio Bearer Setup/reconfiguration procedure or in the broadcasted system information.

Meanwhile, in a TTI, the user equipment just can perform the general random access or the enhanced uplink random access on the primary carrier. While the user equipment can perform the general random access or the enhanced uplink random access, it can perform the enhanced uplink random access on one or more secondary carriers; and the user equipment can perform the enhanced uplink random access or the general random access, or perform the enhanced uplink random access on one or more secondary carriers.

The present invention developed the single carrier TD-SCDMA enhanced uplink system of 3GPP and the multi-carrier TD-SCDMA system of CCSA and is compatible with them, and expands the random access resources and the corresponding configuration and usage method in multi-carrier TD-SCDMA system, which ensures that during the multi-carrier E-DCH transmission without grant resource, the UE can transmit the relative assistant schedule information and request the grant for carrying out the E-DCH data transmission, so as to support to introduce the enhanced uplink technology into the multi-carrier TD-SCDMA system.

### Brief Description of the Drawings

The drawings illustrated herein provide a further understanding of the present invention and constitute a part of the application. The exemplary embodiments of the present invention and the explanation thereof are given thereafter by way of explaining the present invention, and thus are not limitative of the present invention, wherein:
Fig.1 is a flow chart of the random access method of time division synchronization code division multiple access enhanced uplink system according to the embodiment of the present invention; and
Fig.2 is a model view of the random access method of time division synchronization code division multiple access enhanced uplink system according to the embodiment of the present invention.

### Brief Description of the Drawings

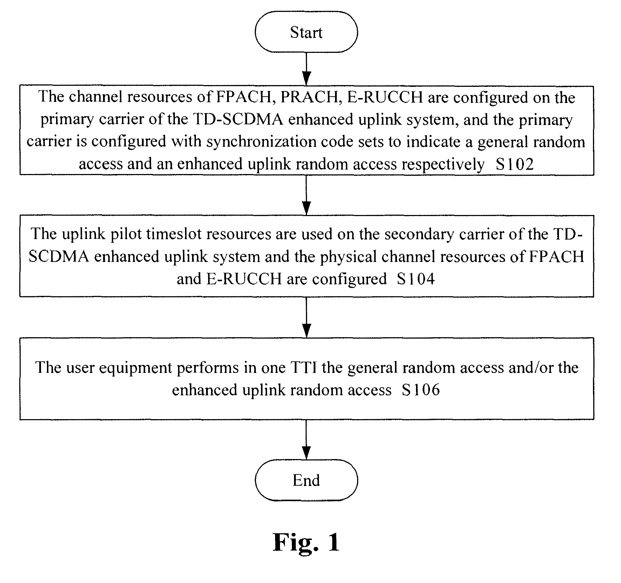

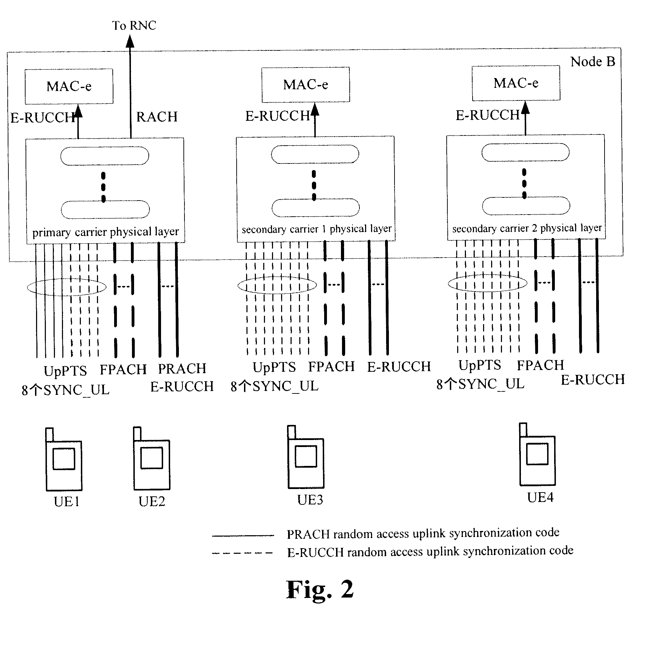

The embodiments of the present invention will be detailed hereinafter in connection with the drawings. As shown in Fig.2, one of the multi-carrier cells in the multi-carrier TD-SCDMA system comprises three carriers, a primary carrier, an secondary carrier 1 and an secondary carrier 2, wherein the uplink pilot timeslot (UpPTS) on the secondary carrier is used, namely, the UE can emit uplink synchronous code (SYNC_UL code) by the UpPTS of the secondary carrier. An d the relative resources of the PRACH random access are configured only on the primary carrier, while the relative resources of the E-RUCCH random access are configured on all carriers. The UE can carry out the PRACH random access only on the primary carrier, and can carry out the E-RUCCH random access on the primary carrier, and/or the secondary carrier 1 and/or the secondary carrier 2. As shown in Fig.1, the random access method according to the embodiment of the present invention comprises the following steps (the following steps are not in a strict time sequence):

S102, on the network side, the physical channel resources of the fast physical access channel (FPACH), PRACH, E-RUCCH and the like are configured on the primary carrier wherein the PRACH and E-RUCCH physical channels can share the physical code resources, and allocate to the primary carrier an uplink synchronous code sets to indicate the PRACH random access and the E-RUCCH random access respectively. At the same time, the physical channel resources of the FPACH and E-RUCCH are configured on the secondary carriers.

Meanwhile, as for the secondary carrier, it is enough that the physical channel resources of the FPACH and the E-RUCCH are configured on the carrier performing the E-DCH transmission (namely, the carrier which is configured with the physical channel resources required by E-DCH transmission). Becaus e all the uplink synchronous codes of the UpPTS timeslot of the secondary carriers are only used for the E-RUCCH random access, it is not necessary to configure the uplink synchronous code sets to indicate the PRACH random access and the E-RUCCH random access respectively.

On the network side, according to the existing network structure (namely, the radio network consists of two network elements, the radio network controller (RNC) and the node B, and the RNC and the node B are connected through Iub interface), the configuration can be achieved by the RNC initiating through the Iub interface to the node B a physical shared channel reconfiguration process in the node B application part (NBAP) protocol, wherein the message of the "physical shared channel reconfiguration request" comprises the above resource configuration information, and is added with carrier indication information, in order to achieve the above resource configuration for each carrier.

The configuration method of the above resource configuration on the primary carrier is same as the existing method of the single carrier TD-SCDMA enhanced uplink system of 3GPP standard. The FPACH and E-RUCCH physical channel resource configuration on the secondary carrier can be performed referring to the configuration method of the FPACH and PRACH physical channels.

If the radio network on the network side only has one network element, node B, then the configuration process can be achieved by the interactive cooperation between the relative functional modules in the node B.

S104, on the network side, the resources relative to the PRACH random access and the E-RUCCH random access configured on the primary carrier and the secondary carriers are transmitted to the UE.

The configuration method of the above resources configuration on the primary carrier is same as the existing method of the single carrier TD-SCDMA enhanced uplink system of 3GPP standard, namely, the information about the physical channel resource and the uplink synchronous code set on the primary carrier are transmitted to the UE in the broadcasted system information.

As for the above resources configuration on the secondary carriers, the resource configuration information relative to the E-RUCCH random access can be transmitted to the UE during the Radio Bearer Setup/reconfiguration procedure, and also can be transmitted to the UE in the broadcasted system information.

According to the existing network structure, the method for configuring the resources relative to the E-RUCCH random access on the secondary carrier during the Radio Bearer Setup/reconfiguration procedure is achieved by the RNC initiating through Uu interface (the interface between the network side and the UE) to UE a RRC connection establishment, a radio Bearer Setup, a Radio Bearer reconfiguration, a radio bearer release, a transport channel reconfiguration, a physical channel reconfiguration, a cell update and so on in the radio resource control (RRC) protocol. Meanwhile, the message corresponding to "RRC connection setup", "radio bearer setup", "radio bearer reconfiguration", "radio bearer release", "transport channel reconfiguration", "physical channel reconfiguration" and "cell update confirm" comprises the above resource configuration information and is added with carrier indication information, so as to perform the above resource configuration respectively on each carrier. If the radio network on the network side just has one network element, node B, then the node B transmits to the UE the resource configuration information relative to the E-DCH transmission through a process and message similar to the above.

S106, in a certain transmission time interval (TTI), the UE determines the PRACH random access or the E-RUCCH random access, and selects one or more carriers to initiate the PRACH random access or the E-PRACH random access process according to the resource configuration status.

On the UE side, if the UE has no HSUPA relative resource, then the UE can not carry out the E-RUCCH random access, but only can initiate the PRACH random access, therefore the UE carries out the PRACH random access process on the primary carrier. If the UE has the HSUPA relative resource allocated but it is the PRACH random access which is initiated, then the UE also can carry out the PRACH random access process on the primary carrier (as the UE1 shown in Fig.2).

If the UE has the HSUPA relative resource allocated and it is the E-RUCCH random access which is initiated, then the UE can carry out the E-RUCCH random access on one or more of the primary carrier, the secondary carrier 1 and the secondary carrier 2 to transmit the SI information to the node B. The UE2, UE3 and UE4 shown in Fig.2 respectively carry out the E-RUCCH random access on the primary carrier, the secondary carrier I and the secondary carrier 2.

If the UE carries out the PRACH random access or the E-RUCCH random access on the primary carrier, then during the random access process, according to the uplink synchronous code sets configured for different random access, one uplink synchronous code in the corresponding set is selected to carry out the uplink synchronous process.

In one TTI, on the primary carrier, the UE only can carry out the PRACH random access or the E-RUCCH random access process, and can not carry out both the PRACH random access and the E-RUCCH random access process simultaneously. However, on the primary carrier and plural secondary carriers, the UE can carry out the E-RUCCH random access process on one or more secondary carriers while carrying out the PRACH random access or the E-RUCCH random access process on the primary carrier, and Alternatively UE can select to carry out the PRACH random access or the E-RUCCH random access process only on the primary carrier, or select to carry out the E-RUCCH random access process only on one secondary carrier.

After the UE initiates the random access, the node B determines and receives the PRACH physical channel or the E-RUCCH physical channel on the primary carrier according to the uplink synchronization code and receives the E-RUCCH physical channel on the secondary carrier, and respectively processes the data received by the PRACH and E-RUCCH physical channel.

Because both PRACH random access and E-RUCCH random access can be carried out the primary carrier and it is respectively configured with different uplink synchronization code sets, therefore on the primary carrier, the node B needs to determine it is the PRACH physical channel or the E-RUCCH physical channel based on the uplink synchronization code received during the uplink synchronization process. The transmitting and the receiving of the uplink synchronization code corresponds to the transmitting and receiving of the PRACH physical channel or the E-RUCCH physical channel following thereto. As a result, though the PRACH physical channel and the E-RUCCH physical channel share the same physical code resource, the node B still can distinguish the receiving of the PRACH physical channel or the E-RUCCH physical channel. As for the secondary carrier, it is the E-RUCCH physical channel which is received during the random access process.

In the node B, the data received from the E-RUCCH physical channel is transmitted to the relative entity of MAC-e sub-layer related to the E-DCH transmission in the node B. The data received from the PRACH physical channel is transmitted to the RNC in the form of RACH transmission channel data package, if the radio network comprises two entities, the RNC and the node B; and is transmitted to the relative functional entity in the node B if the radio network just has one entity, the node B.

All in all, the present invention develops the single carrier TD-SCDMA enhanced uplink system of 3GPP and the multi-carrier TD-SCDMA system of CCSA and is compatible with them, and expands the random access resources and the corresponding configuration and usage method in the multi-carrier TD-SCDMA system, which ensures that the UE, during the multi-carrier E-DCH transmission without grant resource, can transmit the relative assistant schedule information and request for grant to carry out the E-DCH data transmission. As a result, the present invention supports introducing the enhanced uplink technology into the multi-carrier TD-SCDMA system.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. A random access method of time division synchronization code division multiple access enhanced uplink system, comprising:
the physical channel resources of fast physical access channel (FPACH), physical random access channel (PRACH), enhanced uplink random access control channel (E-RUCCH) are configured on the primary carrier of time division synchronization code division multiple access (TD-SCDMA) enhanced uplink system, and the primary carrier is configured with uplink synchronization code sets to indicate a general random access and an enhanced uplink random access respectively;
on the secondary carrier of the TD-SCDMA enhanced uplink system, a uplink pilot timeslot (TTI) resource is used and the physical channel resource of the FPACH and the E-RUCCH are configured
user equipment can perform in one TTI the general random access and/or the enhanced uplink random access.

2. The random access method according to Claim 1, wherein the general random access is a random access in which the data is transmitted on the physical random access channel; and the enhanced uplink random access is a random access in which the data is transmitted on the enhanced uplink random access control channel.

3. The random access method according to Claim 1, wherein the user equipment performs the general random access or the enhanced uplink random access on the primary carrier, and/or performs the enhanced uplink random access on one or more secondary carriers.

4. The random access method according to Claim 1, wherein the physical random access channel and the enhanced uplink random access control channel share the same physical code resource on the primary carrier.

5. The random access method according to Claim 1, wherein the using of the uplink pilot timeslot resource on the secondary carrier means that the uplink pilot timeslot resources on the secondary carrier are used to transmit uplink synchronization codes which are used for the enhanced uplink random access.

6. The random access method according to Claim 1, wherein the relative information of the said physical channel resources on the primary carrier and the said uplink synchronization code sets are transmitted to the user equipment in the broadcasted system information.

7. The random access method according to Claim 1, wherein the relative information of said physical channel resources on the secondary carrier are transmitted to the user equipment in the Radio Bearer Setup/reconfiguration procedure or the broadcasted system information.

8. The random access method according to anyone of Claims 1 to 7, wherein in one TTI, the user equipment performs the general random access or the enhanced random access on the primary carrier.

9. The random access method according to anyone of Claims 1 to 7, wherein in one TTI, the user equipment performs the enhanced uplink random access on one or more secondary carriers while the user equipment performs the general random access or the enhanced uplink random access on the primary carrier.

10. The random access method according to anyone of Claims 1 to 7, wherein in one TTI, the user equipment performs the enhanced uplink random access or the general random access on the primary carrier, or the enhanced uplink random access on one or more secondary carriers.
